# EUROPÄISCHE PATENTSCHRIFT

(11) **EP 1 761 711 B1**
(45) Veröffentlichungstag und Bekanntmachung des Hinweises auf die Patenterteilung: **20.08.2008**
(21) Anmeldenummer: 05759040.8
(22) Anmeldetag: 17.06.2005
(51) Int. Cl.: F16C 19/38, F16C 23/08, F16C 33/60

(54) **WÄLZLAGER, INSBESONDERE ZWEIREIHIGES ROLLENLAGER**
ANTIFRICTION BEARING, IN PARTICULAR DOUBLE-ROW ROLLER BEARING
PALIER A ROULEMENT, NOTAMMENT ROULEMENT A ROULEAUX A DEUX RANGEES

(30) Priorität: 26.06.2004 DE 102004030964
(43) Veröffentlichungstag der Anmeldung: 14.03.2007
(73) Patentinhaber: Schaeffler KG, 91074 Herzogenaurach (DE)
(72) Erfinder: SPIELFELD, Jörg, 97422 Schweinfurt (DE); GLÜCK, Stefan, 97464 Niederwerrn (DE)
(86) Internationale Anmeldenummer: PCT/DE2005/001084
(87) Internationale Veröffentlichungsnummer: WO 2006/000183

(56) Entgegenhaltungen:
- EP-A- 0 303 169
- CH-A- 162 803
- FR-A- 2 368 639

## Beschreibung

### Gebiet der Erfindung

Die Erfindung betrifft ein Wälzlager nach den oberbegriffsbildenden Merkmalen des Patentanspruchs 1, und sie ist insbesondere vorteilhaft an zweireihigen Rollenlagern, wie Zylinder-, Tonnen-, Kegel- und Pendelrollenlagern realisierbar.

### Hintergrund der Erfindung

Dem Fachmann ist es allgemein bekannt, das Wälzlager, die zur Übertragung radialer und/oder axialer Lasten an rotierenden Teilen dienen, nach der Form ihrer Wälzkörper einerseits in Kugellager und andererseits in Rollenlager unterteilt werden. Bei den Rollenlagern unterscheidet man dabei zwischen Zylinderrollenlagern, Kegelrollenlagern, Pendelrollenlagern sowie Tonnenrollenlagern mit asymmetrischen oder symmetrischen Rollen, die wiederum je nach Anforderung als ein- oder zweireihige Rollenlager ausgeführt sein können. Zweireihige Rollenlager weisen dabei die Gemeinsamkeit auf, dass sie im wesentlichen aus einem äußeren Lagerring und einem inneren Lagerring sowie aus einer Anzahl zwischen den Lagerringen in zwei Reihen angeordneten Rollen bestehen, die durch einen Lagerkäfig in Umfangsrichtung in gleichmäßigen Abständen zueinander gehalten werden. Die Innenseite des äußeren Lagerrings bildet dabei die Außenlaufbahn(en) und die Außenseite des inneren Lagerrings ist mit zwei Innenlaufbahnen für die Rollen ausgebildet, wobei zwischen den Innenlaufbahnen des inneren Lagerrings ein Führungsring angeordnet ist, auf dessen ebener Außenmantelfläche der Lagerkäfig aufliegt. Dieser Führungsring ist wahlweise fest oder lose auf dem inneren Lagerring angeordnet und weist darüber hinaus zwei ebene Seitenflächen auf, an denen die Rollen mit jeweils einer ihrer Stirnflächen im Betrieb des Lagers abrollen.

Ein als zweireihiges Pendelrollenlager ausgebildetes Wälzlager dieser Art ist beispielsweise aus der DE 197 42 570 A1 und der CH 162 803 vorbekannt. Bei diesem Pendelrollenlager ist der Führungsring für die Rollen als loser Führungsring ausgebildet, der einen rechteckigen Profilquerschnitt aufweist und auf dem inneren Lagerring zwischen den beiden Innenlaufbahnen der Rollen geführt wird. Dieser Führungsring ist in seiner axialen Breite so dimensioniert, dass die Rollen des Pendelrollenlagers axial vorgespannt sind bzw. dass durch den Führungsring auf die Rollen eine Kraft unter einem spitzen Winkel zu den Rollenachsen ausgeübt wird. Dadurch werden die Berührungspunkte zwischen den Rollen und der Außenlaufbahn sowie den Innenlaufbahnen derart verschoben, dass ein Schränken der Rollen verringert wird.

In der Praxis hat es sich jedoch gezeigt, dass es bei unterschiedlichen Betriebstemperaturen eines solchen Pendelrollenlagers zu einer Abnahme oder zu einer Zunahme der axialen Vorspannung der Rollen über den Führungsring kommt, die vor allem aus den unterschiedlichen Wärmeausdehnungskoeffizienten zwischen dem Führungsring, den Rollen und dem Innenring des Pendelrollenlagers resultiert. Dadurch kommt es im Betrieb des Lagers bei Abnahme der Vorspannung nach wie vor zu Schränkbewegungen der Rollen oder bei Zunahme der Vorspannung zu einer hohen Flächenpressung zwischen den Rollen und den ebenen Seitenflächen des Führungsrings, durch die der Führungsring übermäßig stark verschlissen wird. Außerdem hat es sich gezeigt, dass es unter bestimmten Lastbedingungen zu einem Auswandern der Berührungspunkte zwischen den Rollen und dem Führungsring kommen kann, bei dem die Stirnflächen der Rollen an den geraden Seitenflächen des Führungsbordes aufgleiten. Dadurch rollen die Rollen zeitweise nur noch auf den Kanten der Seitenflächen des Führungsringes ab und es kommt zu sogenannten Kantenläufern, durch die der Führungsring ebenfalls stark verschlissen wird und die nicht selten die Ursache für einen Ausfall des Lagers darstellen.

### Aufgabe der Erfindung

Ausgehend von den dargelegten Nachteilen des bekannten Standes der Technik liegt der Erfindung deshalb die Aufgabe zu Grunde, ein Wälzlager, insbesondere ein zweireihiges Rollenlager, zu konzipieren, dessen Rollen unabhängig von der Betriebstemperatur des Lagers jederzeit eine solche axiale Vorspannung aufweisen, dass sowohl Schränkbewegungen der Rollen als auch eine hohe Flächenpressung zwischen den Rollen und den Seitenflächen des Führungsrings weitestgehend vermieden werden.

### Beschreibung der Erfindung

Erfindungsgemäß wird diese Aufgabe bei einem Wälzlager nach dem Oberbegriff des Anspruchs 1 derart gelöst, dass der zwischen den Innenlaufbahnen des inneren Lagerrings angeordnete Führungsring axial geteilt ausgebildet ist und aus zwei Teilringen besteht, die durch mehrere aus einer Formgedächtnislegierung bestehende Zwischenstücke derart miteinander verbunden sind, dass mit dem Führungsring bei jeder Betriebstemperatur durch selbsttätige Längenveränderungen der Zwischenstücke eine annähernd konstante axiale Vorspannung auf die Rollen des Rollenlagers erzeugbar ist.

Sogenannte Formgedächtnislegierungen oder auch Memory-Legierungen sind seit mehr als 30 Jahren Gegenstand der anwendungsorientierten Materialforschung und zeichnen sich dadurch aus, dass sie nach geeigneter Behandlung auf Grund einer Umwandlung vom Austenit zum Martensit ihre Gestalt in Abhängigkeit von der Temperatur oder auch von Druck verändern. In ihrer Tieftemperaturform können Werkstücke aus solchen Legierungen bleibend, das heißt scheinbar plastisch, verformt werden, während sie bei Erwärmung über die Umwandlungstemperatur ihre ursprüngliche Form wieder annehmen. Werden diese Werkstücke erneut abgekühlt, können sie erneut plastisch verformt werden, nehmen aber, sofern sie entsprechend erwärmt werden, unter Rückkehr ihrer Mikrostruktur zum Austenit wieder ihre makroskopische, ursprüngliche Hochtemperaturform an. Beim Formgedächtnisverhalten kann man grundsätzlich zwischen dem Einwegeffekt, dem Zweiwegeeffekt und der Pseudoelastizität unterscheiden. Beim Einwegeffekt nimmt ein Material, das bei einer tiefen Temperatur verformt wurde, seine ursprüngliche Form wieder an, wenn es auf eine höhere Temperatur erhitzt wurde. Als Zweiwegeeffekt bezeichnet man dagegen die Erscheinung, bei der sich das Material sowohl bei Temperaturerhöhung als auch bei Abkühlung an seine eintrainierte Form erinnert. Von Pseudoelastizität spricht man schließlich, wenn die Umwandlung vom Austenit zum Martensit nicht durch Abkühlen, sondern in bestimmten Temperaturbereichen durch eine Schubspannung mechanisch erreicht wird. Ein pseudoelastischer Werkstoff verformt sich während der Belastung zunächst rein elastisch und erst ab einer kritischen Spannung setzt eine spannungsindizierte Umwandlung von Austenit zu Martensit ein, durch die hohe elastische Dehnungsbeträge bei konstanter Spannung erzielt werden. Bei Entlastung wandelt sich der Werkstoff wieder in seine Ausgangsstruktur von Martensit zu Austenit um und die Verformung geht quasi-elastisch zurück.

Als zweckmäßige Weiterbildung des erfindungsgemäß ausgebildeten Wälzlagers wird es daher zunächst vorgeschlagen, dass der Führungsring bevorzugt einen rechteckigen Profilquerschnitt aufweist und in seiner Profilbreite axial derart geteilt ausgebildet ist, dass die beiden Teilringe einen jeweils gleich großen, ebenfalls rechteckigen Profilquerschnitt aufweisen. Derartige Führungsringe mit einem rechteckigen Profilquerschnitt haben sich in ihrer Herstellung als besonders einfach und kostengünstig erwiesen und weisen gegenüber Führungsringen mit trapezförmigen Profilquerschnitt zudem den Vorteil auf, dass sie in allen Arten zweireihiger Rollenlager einsetzbar sind. Zumindest für zweireihige Schrägrollenlager ist es jedoch auch möglich, den Führungsring mit einem trapezförmigen Profilquerschnitt auszubilden und in seiner Profilbreite axial derart zu teilen, dass die entstehenden Teilringe jeweils einen gleich großen, keilförmigen Profilquerschnitt aufweisen.

Hinsichtlich der die Teilringe des Führungsringes miteinander verbindenden und aus einer Formgedächtnislegierung bestehenden Zwischenstücke wird es als weiteres Merkmal des erfindungsgemäß ausgebildeten Wälzlagers vorgeschlagen, diese bevorzugt als zylindrische Bolzen auszubilden, die in gleichmäßig zueinander beabstandeten Durchgangsbohrungen in den Seitenflächen der Teilringe befestigt sind. Als ausreichend haben sich dabei acht, jeweils im Winkel von 45° zueinander beabstandete Durchgangsbohrungen in den Teilringen erwiesen, in denen entsprechend acht die Teilringe miteinander verbindende zylindrische Bolzen aus einer Formgedächtnislegierung mit annähernd gleichem Durchmesser wie die Durchgangsbohrungen bevorzugt durch Verkleben befestigt sind. Denkbar wäre es jedoch auch, die Teilringe des Führungsrings durch einen komplett aus einer Formgedächtnislegierung bestehenden und mit den Innenseiten der Teilringe verklebten Zwischenring mit gleichem Innen- und Außendurchmesser wie die Teilringe miteinander zu verbinden oder die Zwischenstücke aus einer Formgedächtnislegierung in anderer geeigneter Weise auszubilden, beispielsweise als zwischen den Teilringen angeordnete Metallplättchen, und/oder die Zwischenstücke in anderer geeigneter Weise an den Teilringen zu befestigen.

Ein letztes Merkmal des erfindungsgemäß ausgebildeten Wälzlagers ist es schließlich noch, dass die miteinander verbundenen Teilringe des Führungsringes einen Ausgleichsspalt zueinander aufweisen und dass die Formgedächtnislegierung der Zwischenstücke bevorzugt als Beta-Nickel-Titan-Legierung mit Pseudoelastizität als Formgedächtniseigenschaft ausgebildet ist. Eine solche Legierung mit Pseudoelastizität als Formgedächtniseigenschaft hat sich für den vorgesehenen Verwendungszweck als am geeignetsten erwiesen, da das gummiartige Verhalten einer solchen Legierung es mit entsprechender Einstellung ermöglicht, temperaturbedingte Schwankungen der axialen Vorspannung der Rollen des Lagers so auszugleichen, dass diese bei jeder Betriebstemperatur konstant ist. Möglich ist jedoch auch die Verwendung anderer bekannter Formgedächtnislegierungen mit derartigem Formgedächtnisverhalten, wie beispielsweise Beta-Legierungen aus Kupfer-Nickel-Titan, Kupfer-Zink-Aluminium, Kupfer-Aluminium-Nickel oder Eisen-Nickel-Chrom.

Das erfindungsgemäß ausgebildete Wälzlager weist somit gegenüber den aus dem Stand der Technik bekannten Wälzlagern den Vorteil auf, dass durch die Teilung des Führungsrings in zwei Teilringe und deren Verbindung über gesonderte Zwischenstücke aus einer Formgedächtnislegierung mit Pseudoelastizität der Führungsring selbsttätig durch Längenveränderungen der Zwischenstücke unabhängig von der Betriebstemperatur des Lagers jederzeit eine konstante Vorspannung auf die Rollen des Lagers ausübt. Dadurch werden sowohl Schränkbewegungen der Rollen als auch eine hohe Flächenpressung zwischen den Rollen und den Seitenflächen des Führungsrings vermieden und die daraus resultierenden Folgeschäden sind ausgeschlossen.

### Kurze Beschreibung der Zeichnungen

Eine bevorzugte Ausführungsform des erfindungsgemäß ausgebildeten Wälzlagers wird nachfolgend unter Bezugnahme auf die beigefügten Zeichnungen näher erläutert. Dabei zeigen:
- Figur 1: eine räumliche Darstellung eines erfindungsgemäß ausgebildeten zweireihigen Pendelrollenlagers mit einem Teilschnitt;
- Figur 2: eine vergrößerte Darstellung des Teilschnittes am erfindungsgemäß ausgebildeten Pendelrollenlager gemäß Figur 1;
- Figur 3: eine vergrößerte Darstellung eines Querschnitts durch das erfindungsgemäß ausgebildete Pendelrollenlager gemäß Figur 1;
- Figur 4: eine schematische Darstellung des Kontaktes zwischen den Rollen und dem Führungsring des erfindungsgemäß ausgebildeten Pendelrollenlagers gemäß Figur 1 in Draufsicht.

### Ausführliche Beschreibung der Zeichnungen

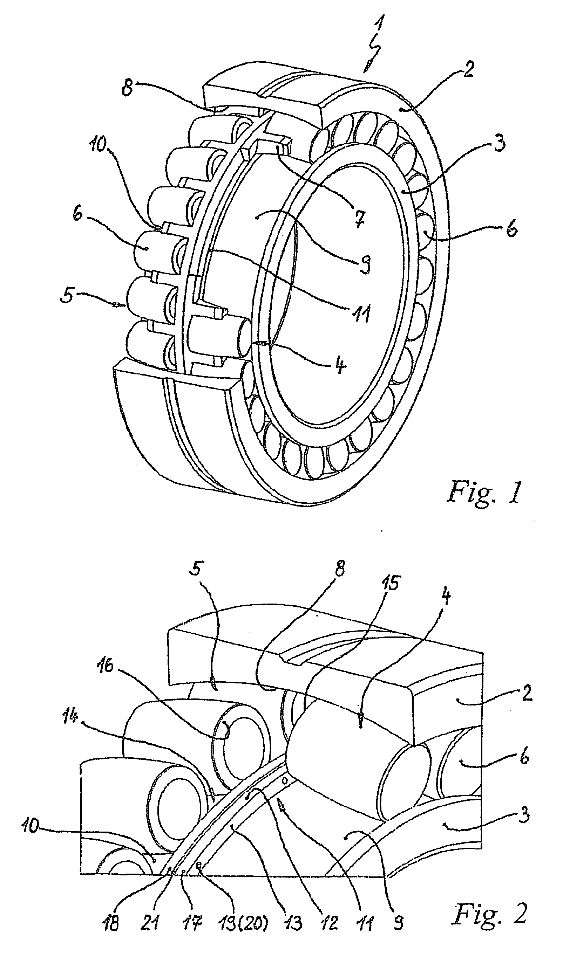

Aus Figur 1 geht deutlich ein als Pendelrollenlager ausgebildetes zweireihiges Rollenlager 1 hervor, welches im Wesentlichen aus einem äußeren Lagerring 2 und einem inneren Lagerring 3 sowie aus einer Anzahl zwischen den Lagerringen 2, 3 in zwei Reihen 4, 5 nebeneinander angeordneter Rollen 6 besteht. Diese, als symmetrische Tonnenrollen ausgebildete Rollen 6 werden deutlich sichtbar durch einen Lagerkäfig 7 in Umfangsrichtung in gleichmäßigen Abständen zueinander gehalten und rollen mit ihren Umfangsflächen auf einer an der Innenseite des äußeren Lagerrings 2 gebildeten gekrümmten Außenlaufbahn 8 und auf zwei auf der Außenseite des inneren Lagerrings 3 eingeformten gekrümmten Innenlaufbahnen 9, 10 ab. Zwischen den Innenlaufbahnen 9, 10 des inneren Lagerringes 3 ist darüber hinaus ein loser Führungsring 11 angeordnet, auf dessen in Figur 2 sichtbarer Außenmantelfläche 12 der Lagerkäfig 7 aufliegt und an dessen Seitenflächen 13, 14 die Rollen 6 mit jeweils einer ihrer Stirnflächen 15, 16 abrollen.

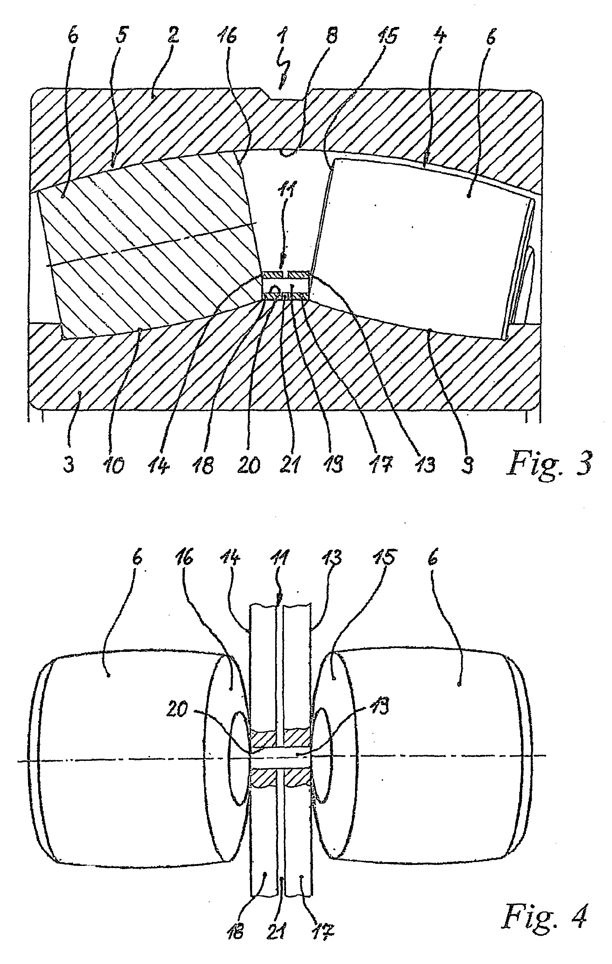

Darüber hinaus ist in den Figuren 2 und 3 zu sehen, dass der zwischen den Innenlaufbahnen 9, 10 des inneren Lagerrings 3 angeordnete Führungsring 11 erfindungsgemäß axial geteilt ausgebildet ist und aus zwei Teilringen 17, 18 besteht, die durch mehrere aus einer Formgedächtnislegierung bestehende Zwischenstücke miteinander verbunden sind. Die Formgedächtnislegierung der Zwischenstücke ist dabei als Beta-Nickel-Titan-Legierung mit Pseudoelastizität als Formgedächtniseigenschaft ausgebildet, so dass es im Betrieb des Rollenlagers 1 durch selbsttätige Längenveränderungen der Zwischenstücke möglich ist, mit dem Führungsring 11 bei jeder Betriebstemperatur eine annähernd konstante axiale Vorspannung auf die Rollen 6 des Rollenlagers 1 zu erzeugen.

In vorteilhafter Weise weist der Führungsring 11 dabei klar ersichtlich einen rechteckigen Profilquerschnitt auf und ist in seiner Profilbreite axial derart geteilt ausgebildet, dass die beiden Teilringe 17, 18 ebenfalls einen jeweils gleich großen, rechteckigen Profilquerschnitt aufweisen und in Verbindung miteinander einen Ausgleichsspalt 21 zueinander aufweisen.

Die Zwischenstücke zu Verbindung der Teilringe 17, 18 des Führungsringes 11 miteinander sind, wie die Figuren 3 und 4 desweiteren zeigen, als zylindrische Bolzen 19 ausgebildet, die in gleichmäßig zueinander beabstandeten Durchgangsbohrungen 20 in den Seitenflächen 13, 14 der Teilringe 17, 18 durch Verkleben befestigt sind.

In seiner Funktion weist das derart ausgebildete Rollenlager 1, bei dem der Führungsring 11 im eingebauten Zustand eine definierte Vorspannung auf die Rollen 6 ausübt, dann die Eigenschaft auf, dass mit zunehmender Erwärmung des Rollenlagers 1 im Betrieb und der damit verbundenen Ausdehnung der Rollen 6 sich die Flächenpressung zwischen dem Führungsring 11 und den Rollen 6 erhöht, durch die eine Druckspannung in den Bolzen 19 zwischen den Teilringen 17, 18 entsteht. Durch deren Ausbildung aus einer Formgedächtnislegierung löst diese Druckspannung mit weiterer Erhöhung eine proportionale Verkürzung der Bolzen 19 aus, durch die der Ausgleichsspalt 21 zwischen den Teilringen 17, 18 geringfügig kleiner wird und somit die Flächenpressung zwischen dem Führungsring 11 und den Rollen 6 wieder auf das Maß der axialen Vorspannung der Rollen 6 gesenkt wird.

Bei Abkühlung des Rollenlagers 1 lässt die Druckspannung in den Bolzen 19 zwischen den Teilringen 17, 18 des Führungsringes 11 wieder nach, so dass die Bolzen 19 und der Führungsring 11 allmählich wieder ihre ursprüngliche Länge bzw. Breite einnehmen. Somit wird bei jeder Betriebstemperatur des Rollenlagers 1 eine konstante Vorspannung auf die Rollen 6 ausgeübt, durch die sowohl Schränkbewegungen der Rollen 6 als auch eine hohe Flächenpressung zwischen den Rollen 6 und dem Führungsring 11 vermieden werden.

### Bezugszahlenliste

- 1: Rollenlager
- 2: äußerer Lagerring
- 3: innerer Lagerring
- 4: Reihe
- 5: Reihe
- 6: Rollen
- 7: Lagerkäfig
- 8: Außenlaufbahn
- 9: Innenlaufbahn
- 10: Innenlaufbahn
- 11: Führungsring
- 12: Außenmantelfläche
- 13: Seitenfläche
- 14: Seitenfläche
- 15: Stirnfläche
- 16: Stirnfläche
- 17: Teilring
- 18: Teilring
- 19: Bolzen
- 20: Durchgangsbohrungen
- 21: Ausgleichsspalt

## Patentansprüche

1. Wälzlager, insbesondere zweireihiges Rollenlager (1), welches im Wesentlichen aus einem äußeren Lagerring (2) und einem inneren Lagerring (3) sowie aus einer Anzahl zwischen den Lagerringen (2, 3) in zwei Reihen (4, 5) nebeneinander angeordneter Rollen (6) besteht, die durch einen Lagerkäfig (7) in Umfangsrichtung in gleichmäßigen Abständen zueinander gehaltenen werden, wobei die Innenseite des äußeren Lagerrings (2) als Außenlaufbahn(en) (8) und die Außenseite des inneren Lagerrings (3) mit zwei Innenlaufbahnen (9, 10) für die Rollen (6) ausgebildet sind und zwischen den Innenlaufbahnen (9, 10) des inneren Lagerringes (3) ein loser Führungsring (11) angeordnet ist, auf dessen Außenmantelfläche (12) der Lagerkäfig (7) aufliegt und an dessen Seitenflächen (13, 14) die Rollen (6) mit jeweils einer ihrer Stirnflächen (15, 16) abrollen, **dadurch gekennzeichnet, dass** der zwischen den Innenlaufbahnen (9, 10) des inneren Lagerrings (3) angeordnete Führungsring (11) axial geteilt ausgebildet ist und aus zwei Teilringen (17, 18) besteht, die durch mehrere aus einer Formgedächtnislegierung bestehende Zwischenstücke derart miteinander verbunden sind, dass mit dem Führungsring (11) bei jeder Betriebstemperatur durch selbsttätige Längenveränderungen der Zwischenstücke eine annähernd konstante axiale Vorspannung auf die Rollen (6) des Rollenlagers (1) erzeugbar ist.

2. Wälzlager nach Anspruch 1, **dadurch gekennzeichnet, dass** der Führungsring (11) bevorzugt einen rechteckigen Profilquerschnitt aufweist und in seiner Profilbreite axial derart geteilt ausgebildet ist, dass die beiden Teilringe (17, 18) einen jeweils gleich großen, ebenfalls rechteckigen Profilquerschnitt aufweisen.

3. Wälzlager nach Anspruch 1, **dadurch gekennzeichnet, dass** die Zwischenstücke zu Verbindung der Teilringe (17, 18) des Führungsringes (11) miteinander bevorzugt als zylindrische Bolzen (19) ausgebildet sind, die in gleichmäßig zueinander beabstandeten Durchgangsbohrungen (20) in den Seitenflächen (13, 14) der Teilringe (17, 18) befestigt sind.

4. Wälzlager nach Anspruch 1, **dadurch gekennzeichnet, dass** die miteinander verbundenen Teilringe (17, 18) des Führungsringes (11) einen Ausgleichsspalt (21) zueinander aufweisen und Formgedächtnislegierung der Zwischenstücke bevorzugt als Beta-Nickel-Titan-Legierung mit Pseudoelastizität als Formgedächtniseigenschaft ausgebildet ist.

## Claims

1. Antifriction bearing, in particular double-row roller bearing (1), which comprises substantially an outer bearing ring (2) and an inner bearing ring (3) and a number of rollers (6) which are arranged next to one another in two rows (4, 5) between the bearing rings (2, 3) and are held at uniform spacings from one another in the circumferential direction by a bearing cage (7), the inner side of the outer bearing ring (2) being configured as outer raceway/raceways (8) and the outer side of the inner bearing ring (3) being configured with two inner raceways (9, 10) for the rollers (6), and a loose guide ring (11) being arranged between the inner raceways (9, 10) of the inner bearing ring (3), on the outer circumferential face (12) of which loose guide ring (11) the bearing cage (7) rests and on the side faces (13, 14) of which loose guide ring (11) the rollers (6) roll with in each case one of their end faces (15, 16), **characterized in that** the guide ring (11) which is arranged between the inner raceways (9, 10) of the inner bearing ring (3) is of axially split configuration and comprises two part rings (17, 18) which are connected to one another by a plurality of intermediate pieces which comprise a shape memory alloy, in such a way that an approximately constant axial prestress can be generated on the rollers (6) of the roller bearing (1) at every operating temperature by way of the guide ring (11) by automatic length changes of the intermediate pieces.

2. Antifriction bearing according to Claim 1, **characterized in that** the guide ring (11) preferably has a rectangular profile cross section and is of axially split configuration in its profile width in such a way that the two part rings (17, 18) have in each case an equally large, likewise rectangular profile cross section.

3. Antifriction bearing according to Claim 1, **characterized in that** the intermediate pieces for connecting the part rings (17, 18) of the guide ring (11) to one another are preferably configured as cylindrical pins (19) which are fastened in through-holes (20) which are spaced apart from one another uniformly in the side faces (13, 14) of the part rings (17, 18).

4. Antifriction bearing according to Claim 1, **characterized in that** the part rings (17, 18) of the guide ring (11) which are connected to one another have a compensation gap (21) with respect to one another, and the shape memory alloy of the intermediate pieces is preferably configured as a beta nickel-titanium alloy having pseudoelasticity as shape memory property.

## Revendications

1. Palier à roulement, notamment roulement à rouleaux à deux rangées (1), lequel est essentiellement constitué d'une bague de palier extérieure (2) et d'une bague de palier intérieure (3) ainsi que d'une pluralité de rouleaux (6) disposés les uns à côté des autres en deux rangées (4,5) entre les bagues de palier (2,3), lesquels sont maintenus par une cage de palier (7) à distances régulières les uns des autres dans la direction circonférentielle, dans lequel la face intérieure de la bague de palier extérieure (2) est configurée comme une (des) voie(s) de roulement extérieure(s) (8) et la face extérieure de la bague de roulement intérieure (3) est configurée avec deux voies de roulement intérieures (9,10) pour les rouleaux (6) et une bague de guidage (11) se mouvant librement est disposée entre les voies de roulement intérieures (9,10) de la bague de palier intérieure (3), sur la surface de gaine extérieure (12) de laquelle repose la cage de palier (7) et sur les surfaces latérales (13,14) de laquelle les rouleaux (6) roulent par une de leurs surfaces frontales (15,16) respectives, **caractérisé en ce que** la bague de guidage (11) disposée entre les voies de roulement intérieures (9,10) de la bague de palier intérieure (3) est configurée comme étant divisée axialement et est constituée de deux bagues partielles (17,18), qui sont reliées l'une à l'autre par plusieurs pièces intermédiaires constituées d'un alliage à mémoire de forme, de telle sorte qu'une précontrainte axiale approximativement constante sur les rouleaux (6) du roulement à rouleaux (1) puisse être générée par la bague de guidage (11) à toute température de fonctionnement par des variations de longueur automatiques des pièces intermédiaires.

2. Palier à roulement selon la revendication 1, **caractérisé en ce que** la bague de guidage (11) présente de préférence une section transversale de profilé rectangulaire et est configurée en étant divisée axialement dans sa largeur de profilé, de telle sorte que les deux bagues partielles (17,18) présentent une section transversale de profilé respective de même grandeur, également rectangulaire.

3. Palier à roulement selon la revendication 1, **caractérisé en ce que** les pièces intermédiaires pour relier les bagues partielles (17,18) de la bague de guidage (11) l'une à l'autre sont de préférence configurées comme des boulons cylindriques (19), qui sont fixés dans des alésages traversants (20) espacés régulièrement les uns des autres dans les surfaces latérales (13,14) des bagues partielles (17,18).

4. Palier à roulement selon la revendication 1, **caractérisé en ce que** les bagues partielles (17,18) reliées l'une à l'autre de la bague de guidage (11) présentent un interstice de compensation l'une par rapport à l'autre et l'alliage à mémoire de forme des pièces intermédiaires est de préférence réalisé comme un alliage bêta nickel-titane avec pseudo-élasticité comme propriété de mémoire de forme.
